# EUROPÄISCHE PATENTSCHRIFT

(11) **EP 2 453 108 B1**
(45) Veröffentlichungstag und Bekanntmachung des Hinweises auf die Patenterteilung: **20.04.2016**
(21) Anmeldenummer: 10191243.4
(22) Anmeldetag: 15.11.2010
(51) Int. Cl.: F01D 5/06, F01D 5/10

(54) **Rotor für eine Strömungsmaschine**
Rotor for a turbomachine
Rotor pour une turbomachine

(43) Veröffentlichungstag der Anmeldung: 16.05.2012
(73) Patentinhaber: MTU Aero Engines AG, 80995 München (DE)
(72) Erfinder: Stiehler, Frank, 04924, Bad Liebenwerda (DE); Borufka, Peter, 82319, Starnberg (DE)

(56) Entgegenhaltungen:
- US-A- 3 847 506
- US-A- 4 457 668
- US-A- 5 957 660
- US-A1- 2006 099 078

## Beschreibung

Die Erfindung betrifft einen Rotor der im Oberbegriff des Patentanspruchs 1 angegebenen Art, eine Strömungsmaschine mit einem Rotor sowie ein Verfahren zum Herstellen eines Rotors für eine Strömungsmaschine.

Bei Strömungsmaschinen wie beispielsweise Flugzeugturbinen, die in zahlreichen Varianten in Luftfahrzeugen, aber auch in verschiedenen Fahrzeugtypen und bei stationären Anwendungen eingesetzt werden, werden in der oder den Brennkammern immer höhere Temperaturen angestrebt, um einen verbesserten Wirkungsgrad zu erzielen. Im Hochdruckteil der Flugzeugturbine, der sich stromabwärts an die Brennkammer anschließt, sind daher alle offenen Oberflächen von Leit- und Laufschaufeln sowie von anderen offen liegenden Bauteilen Temperaturen ausgesetzt, die teilweise im Bereich des Schmelzpunktes der verwendeten Materialien liegen können. Um eine Flugzeugturbine bei einer möglichst hohen Temperatur betreiben zu können, werden daher die dem heißen Gasstrom ausgesetzten Bauteile und insbesondere die Schaufeln gekühlt.

Die Laufschaufeln von derzeit verwendeten Rotoren weisen üblicherweise wenigstens ein Schaufeldeckband auf, welches die radial innere Strömungskanalbegrenzung einer zugeordneten Strömungsmaschine bildet. Aus der EP 2 230 382 A2 ist beispielsweise ein beschaufelter Rotor bekannt, welcher im Bereich unterhalb von Schaufelplattformen seiner Laufschaufeln eine Mehrzahl von Kanälen sowie eine Mehrzahl von Schlitzen aufweist. Jeder Schlitz erstreckt sich im Wesentlichen radial zwischen einem der Kanäle und einer dem Strömungskanal zugewandten Oberfläche der betreffenden Schaufelplattform. Die Schlitze besitzen einen nicht-linearen Verlauf, wodurch sich gegenüber der Drehachse des Rotors ein radial innerer erster Winkel und ein radial äußerer zweiter Winkel ergeben. Der radial innere Winkel und der radial äußere Winkel sind dabei grundsätzlich unterschiedlich voneinander gewählt. Die Kanäle verlaufen im Unterschied zu den Schlitzen achsparallel zur Drehachse des Rotors. Bei dieser Kombination von Kanälen und Schlitzen dienen die Kanäle zum Spannungsabbau und hindern die Schlitze daran, sich im Rotormaterial auszubreiten.

Ein weiterer, in integraler Bauweise als sogenannte Bladed Disk (BLISK) ausgeführter Rotor ist beispielsweise der US 2005/0232780 A1 zu entnehmen. Während des Betriebs des Rotors erhitzen die heißen Betriebsgase das Schaufeldeckband und dementsprechend den Bereich, in welchem der schreiben- oder ringförmigen Rotorgrundkörper mit den Laufschaufel verbunden ist. Dies beeinträchtigt die mechanischen Eigenschaften des Rotors und reduziert seine Lebensdauer. Im Bereich zwischen den Schaufelfüßen der Laufschaufeln und dem Schaufeldeckband. Radial unterhalb des Schaufeldeckbands weisen die Laufschaufeln parallel zur Drehachse des Rotors verlaufende Kanäle auf, die sich zwischen einer Hochdruckseite und einer Niederdruckseite des Rotors erstrecken und insbesondere zur Kühlluftversorgung der Laufschaufeln dienen.

Die US 3847506 A offenbart ein Turbinenbaugruppe mit einer Nabe und einer Reihe von integralen Laufschaufeln, die sich radial nach außen von der Felge weg erstrecken. Eine Reihe von Löchern und dünnen Schlitzen erstrecken sich durch die Nabe zwischen benachbarten Schaufeln, um Stress durch unterschiedliche thermische Expansion zu minimieren und um die Eigenfrequenzen der Schaufeln außerhalb des normalen Betriebsbereichs des Rotors zu verschieben.

Die US 5957660 A offenbart eine Turbinenscheibe zur Aufnahme von Turbinenschaufeln. Die Turbinenscheibe umfasst Kanäle zum Führen eines Kühlluftstroms aus einer vor der Turbinenscheibe befindlichen Kammer und aus einer hinter der Turbinenscheibe befindlichen Kammer.

Als nachteilig an dem bekannten Rotor ist dabei der Umstand anzusehen, dass dieser einen vergleichsweise großen radialen Bauraum benötigt. Darüber hinaus kann die Steifigkeit des Rotors nur durch Einbringung von zusätzlicher Masse erhöht werden, was jedoch zu einer axialen Verbreiterung des Rotors führt und starken geometrischen Restriktionen unterliegt.

Aufgabe der vorliegenden Erfindung ist es, einen Rotor für eine Strömungsmaschine bereitzustellen, welcher ein verbessertes Verhältnis von Masse zu Steifigkeit besitzt. Weitere Aufgaben der Erfindung bestehen darin, eine Strömungsmaschine mit einem derartigen Rotor sowie in Verfahren zum Herstellen eines derartigen Rotors für eine Strömungsmaschine bereitzustellen.

Die Aufgaben werden erfindungsgemäß durch einen Rotor mit den Merkmalen des Patentanspruchs 1, eine Strömungsmaschine gemäß Patentanspruch 14 sowie durch ein Verfahren mit den Merkmalen des Patentanspruchs 15 gelöst. Vorteilhafte Ausgestaltungen der Erfindung sind in den Unteransprüchen angegeben, wobei vorteilhafte Ausgestaltungen des Rotors als vorteilhafte Ausgestaltungen der Strömungsmaschine und des Verfahrens anzusehen sind.

Bei einem erfindungsgemäßen Rotor, welcher eine verbesserte Kühlluftversorgung ermöglicht und gleichzeitig ein möglichst geringes Gewicht besitzt, ist vorgesehen, dass der Kanal als Kühlluftkanal ausgebildet ist und dass bezüglich einer Drehachse des Rotors eine Steigung einer Haupterstreckungsachse des Kanals über die Länge des Kanals das gleiche Vorzeichen besitzt wie eine Steigung einer Haupterstreckungsachse einer radial inneren Strömungskanalbegrenzung des Rotors. Mit anderen Worten ist ein Verlauf des als Kühlluftkanal ausgebildeten Kanals dem radial inneren Verlauf des Strömungskanals entlang der Drehachse des Rotors angepasst, wobei die Steigungen der Haupterstreckungsachse des Kanals und der Haupterstreckungsachse der radial inneren Strömungskanalbegrenzung grundsätzlich gleich oder unterschiedlich groß, jedoch betragsmäßig stets größer als Null gewählt sein können. Wenn der Rotor in eine Strömungsmaschine eingebaut ist, definiert in der Regel ein Gehäuseteil der Strömungsmaschine die radial äußere Strömungskanalbegrenzung des üblicherweise ringförmigen Strömungskanals (Ringraum). Indem der Verlauf des Kanals und des Strömungskanals aneinander angepasst sind, kann daher gegenüber aus dem Stand der Technik bekannten Rotoren, bei denen jeder Kanal parallel zur Drehachse des Rotors verläuft, in Umfangsrichtung des Rotors mehr nicht-unterbrochenes Material im Verbindungsbereich zur Aussteifung des Rotors zur Verfügung gestellt werden. Mit anderen Worten kann der radial äußere, nichtunterbrochene Rand der soliden Rotorscheibe bezüglich der Drehachse radial weiter nach außen gelegt werden. Dieser Rand wird dabei auch als "Liferim" bezeichnet. Wenn man den Rand durch formales Kippen des Kanals aus der Horizontalen heraus anstellt und der Geometrie der radial inneren Ringraumgrenze folgen lässt, vergrößert sich der tragende, homogene und rotationssymmetrische Teil der Rotorscheibe. Gegenüber einem Rotor mit herkömmlichen, horizontal geführten Kanälen wird daher in Umfangsrichtung mehr nicht-unterbrochenes Material als aussteifende Scheibenstruktur zur Verfügung gestellt und vergrößert den tragenden, homogenen Teil des Rotors bzw. seines scheiben- oder ringförmigen Rotorgrundkörpers. Je mehr Material des Rotors radial außen, das heißt in Strömungskanal- bzw. Ringraumnähe der Strömungsmaschine, angeordnet ist, desto steifer ist der Rotor beispielsweise gegenüber Biegeschwingungen. Gemäß dem Trägheitsprinzip ist die Wirkung von Masse abhängig von ihrem Abstand gegenüber den Trägheitsachsen, wobei die Wirkung exponentiell mit dem Abstand wächst. Somit wird einerseits das Schwingungsverhalten des Laufschaufel-Rotorgrundkörper-Systems - insbesondere im Hinblick auf Biege- und Koppelschwingungen - verbessert, andererseits können signifikante Gewichtseinsparungen und Strukturoptimierung realisiert werden, wodurch der Rotor bei gleichzeitig verbesserten mechanischen Eigenschaften auch besonders kompakt ausgebildet sein kann. Zudem kann der Verbindungsbereich zwischen Rotorgrundkörper und Laufschaufel besser an eine Geometrie des Strömungskanals bzw. des Ringraumes der zugeordneten Strömungsmaschine angepasst werden. Indem die Haupterstreckungsachsen des Kanals und der radial inneren Strömungskanalbegrenzung aneinander angepasst sind und nicht-parallel zur Drehachse des Rotors verlaufen, schneidet jede Haupterstreckungsachse die Drehachse des Rotors formal in wenigstens einer Projektionsebene in genau einem Punkt. Im Rahmen der Erfindung unterliegt der Kanal dabei keinen spezifischen Funktionseinschränkungen. So kann der Kanal bei einem Rotor mit gefügten Laufschaufeln beispielsweise als Entlastungsbohrung ausgebildet sein.

In einer vorteilhaften Ausgestaltung der Erfindung ist vorgesehen, dass der zumindest eine Kanal außenumfänglich geschlossen ausgebildet ist. Hierdurch können während des Betriebs des Rotors Strömungsverluste minimiert und Heißgaseinbrüche in den betreffenden Kanal zuverlässig vermieden werden. Insbesondere ist vorgesehen, dass keine in den Kanal mündenden radialen Schlitze oder ähnliche Materialschwächungen vorgesehen sind, so dass der Rotor mechanisch robust und entsprechend langlebig ausgebildet ist.

In einer weiteren vorteilhaften Ausgestaltung der Erfindung ist vorgesehen, dass die Haupterstreckungsachse des Kanals in einem ersten Winkel zur Drehachse angeordnet ist, wobei der ersten Winkel in einer ersten Längsschnittebene des Rotors relativ zu einer parallel zur Drehachse verlaufenden Linie gemessen wird. Mit anderen Worten ist vorgesehen, dass die Haupterstreckungsachse des Kanals in der X-Y-Ebene des Rotors bzw. der zugeordneten Strömungsmaschine gegenüber der Drehachse des Rotors gekippt ausgebildet ist. Hierdurch ist je nach Zweck und Ausgestaltung des Kanals sowohl eine besonders gute Kühlluftzufuhr als auch eine besonders hohe Zugentlastung der radial oberhalb des Kanals liegenden Rotor- und Laufschaufelbereiche ermöglicht.

Dabei hat es sich in weiter Ausgestaltung als vorteilhaft gezeigt, wenn der erste Winkel zwischen 2° und 80°, insbesondere zwischen 10° und 20° beträgt. Unter einem Winkel zwischen 2° und 80° sind dabei insbesondere 2°, 4°, 6°, 8°, 10°, 12°, 14°, 16°, 18°, 20°, 22°, 24°, 26°, 28°, 30°, 32°, 34°, 36°, 38°, 40°, 42°, 44°, 46°, 48°, 50°, 52°, 54°, 56°, 58°, 60°, 62°, 64°, 66°, 68°, 70°, 72°, 74°, 76°, 78° oder 80° sowie entsprechende Zwischenwinkel zu verstehen. Eine besonders gute Kühlluftzufuhr und/oder Zugentlastung der radial oberhalb des Kanals liegenden Rotor- und Laufschaufelbereiche ist insbesondere dann möglich, wenn der erste Winkel 10°, 11°, 12°, 13°, 14°, 15°, 16°, 17°, 18°, 19° oder 20° beträgt. Der erste Winkel kann dabei grundsätzlich entgegen dem Uhrzeigersinn oder im Uhrzeigersinn ermittelt werden, das heißt formal positiv (z. B. +15°) oder negativ (z. B. -15°) sein.

In einer weiteren vorteilhaften Ausgestaltung der Erfindung ist vorgesehen, dass die Haupterstreckungsachse des Kanals in einem zweiten Winkel zur Drehachse angeordnet ist, wobei der zweite Winkel in einer senkrecht auf der ersten Längsschnittebene stehenden zweiten Längsschnittebene des Rotors relativ zu einer parallel zur Drehachse verlaufenden Linie gemessen wird. Mit anderen Worten ist vorgesehen, dass die Haupterstreckungsachse des Kanals in der X-Z-Ebene des Rotors bzw. der zugeordneten Strömungsmaschine gegenüber der Drehachse des Rotors gekippt bzw. gedreht ausgebildet ist. Dies stellt eine alternative oder zusätzliche Möglichkeit dar, um eine besonders gute Kühlluftzufuhr und/oder eine besonders hohe Zugentlastung der radial oberhalb des Kanals liegenden Rotor- und Laufschaufelbereiche zu erzielen. Dabei kann vorgesehen sein, dass die Haupterstreckungsachse des Kanals in Abhängigkeit der Drehrichtung des Rotors gekippt ist.

Weitere Vorteile ergeben sich, wenn der zweite Winkel zwischen 2° und 80°, insbesondere zwischen 10° und 20° beträgt. Unter einem Winkel zwischen 2° und 80° sind dabei insbesondere 2°, 4°, 6°, 8°, 10°, 12°, 14°, 16°, 18°, 20°, 22°, 24°, 26°, 28°, 30°, 32°, 34°, 36°, 38°, 40°, 42°, 44°, 46°, 48°, 50°, 52°, 54°, 56°, 58°, 60°, 62°, 64°, 66°, 68°, 70°, 72°, 74°, 76°, 78° oder 80° sowie entsprechende Zwischenwinkel zu verstehen. Eine besonders gute Kühlluftzufuhr und/oder eine besonderes hohe Zugentlastung der radial oberhalb des Kanals liegenden Rotor- und Laufschaufelbereiche ist möglich, wenn der zweite Winkel 10°, 11°, 12°, 13°, 14°, 15°, 16°, 17°, 18°, 19° oder 20° beträgt. Auch der zweite Winkel kann dabei grundsätzlich entgegen dem Uhrzeigersinn oder im Uhrzeigersinn ermittelt werden, das heißt formal positiv (z. B. +15°) oder negativ (z. B. -15°) sein.

In einer weiteren vorteilhaften Ausgestaltung der Erfindung ist vorgesehen, dass der Kanal als Entlastungsbohrung ausgebildet ist. Als Entlastungsbohrung erzeugt der Kanal eine tangentiale Unterbrechung des Rotors, wodurch die radial oberhalb des Kanals liegenden Rotorbereiche zugentlastet werden. Da der Kanal zusätzlich als Kühlluftkanal ausgebildet ist, kann vorgesehen sein, dass der Kanal fluidisch mit inneren Kühlkanälen der Laufschaufel gekoppelt ist, so dass Kühlluft durch den Kanal in die Laufschaufel eintreten kann.

In einer weiteren vorteilhaften Ausgestaltung der Erfindung ist vorgesehen, dass der Rotor radial unterhalb des Kanals mit einer Trommel verbunden ist. Auf diese Weise kann die Steifigkeit der Trommel (sog. "Drum") zur Erhöhung der Steifigkeit des Rotors mitgenutzt werden, wodurch ein besonders vorteilhaftes Schwingungsverhalten, insbesondere im Hinblick auf Koppelschwingungen bzw. Rotorgrundkörper und Laufschaufeln, erzielt wird. Neben der leichteren Bauweise bei gleichzeitig steiferem Gesamtsystem ist hierdurch auch eine kürzere radiale Bauweise von Statoren einer zugeordneten Strömungsmaschine ermöglicht, da die Trommel radial nah dem Gaskanal angeordnet werden kann. Daher kann vorteilhaft auf große und voluminöse Dichtungselemente - beispielsweise auf sogenannte Honeycombs, Labyrinthdichtungen oder dergleichen - verzichtet werden. Die Trommel (Drum) wird dabei am rotationssymmetrischen, homogenen Teil des Rotorgrundkörpers möglichst nahe unter dem radial äußeren, nicht-unterbrochenen Rand des soliden Rotorgrundkörpers angebunden und kann grundsätzlich auf einer Niederdruck- oder einer Hochdruckseite des Rotors angeordnet werden. Aufgrund der erfindungsgemäßen Ausgestaltung des Kanals kann die Trommel dabei im Vergleich zum Stand der Technik radial besonders weit außen angebunden werden, was zu der besagten Strukturversteifung beiträgt. In weiterer Ausgestaltung der Erfindung ist vorgesehen, dass die Trommel über einen sogenannten Flügel (Wing) an die Rotorschcibc angebunden ist. Auch der Wing kann im Vergleich zum Stand der Technik radial weiter außen mit dem Rotorgrundkörper verbunden werden, so dass die Gesamtsystemsteifigkeit des Laufschaufel-Rotorgrundkörper-Systems entsprechend verbessert wird.

In einer weiteren vorteilhaften Ausgestaltung der Erfindung ist vorgesehen, dass bezüglich der Drehachse des Rotors die Steigungen der Haupterstreckungsachsen mehrerer oder aller Kanäle des Rotors das gleiche Vorzeichen besitzen wie die Steigung der Haupterstreckungsachse der radial inneren Strömungskanalbegrenzung. Hierdurch können die Kühlluftzuführung und Steifigkeit des Rotors zusätzlich gesteigert, dessen Gewicht weiter verringert und die radial außen liegenden Schaufelbereiche besser zugentlastet werden.

Eine weitere Verbesserung der Kühlluftzufuhr ist in weiterer Ausgestaltung dadurch ermöglicht, dass wenigstens zwei Kanäle und/oder benachbarte Kanäle unterschiedliche Querschnittsgeometrien aufweisen. Dies erlaubt in Abhängigkeit der Ausgestaltung des Kanals eine besonders gezielte Beeinflussung der Zugentlastung und/oder des Kühlluftstroms sowie eine verbesserte Einstellung des sich während des Betriebs des Rotors ausbildenden Temperaturgradienten.

Eine besonders hohe mechanische Steifigkeit sowie ein besonders vorteilhaftes Schwingungsverhalten des Rotors werden in weiterer Ausgestaltung der Erfindung dadurch erzielt, dass die Haupterstreckungsachsen aller Kanäle auf einer Kegelmantelfläche liegen. Indem alle Haupterstreckungsachsen der Kanäle mit anderen Worten Kegelmantellinien darstellen und die gleiche Steigung besitzen, besitzt der Rotor ein besonders geringes Gewicht bei gleichzeitig besonders hoher mechanischer Steifigkeit.

In einer weiteren vorteilhaften Ausgestaltung der Erfindung ist vorgesehen, dass die Laufschaufeln lösbar oder stoffschlüssig mit dem Rotorgrundkörper verbunden sind. Hierdurch kann der Rotor besonders flexibel in montierter Bauweise und/oder in integraler BLISK-(Bladed Disk) bzw. BLING-(Bladed Ring) Bauweise hergestellt werden. Bei stoffschlüssig gefügten Laufschaufeln definiert der Kanal dabei mit seiner Anordnung und Ausrichtung den radial äußeren Rand des nicht-unterbrochenen, soliden Rotorgrundskörpers. Bei gebauten Rotoren mit lösbar am Rotorgrundkörper festgelegten Laufschaufeln kann der Kanal vorzugsweise zwischen zwei Scheibenhöcker angeordnet sein.

In einer weiteren vorteilhaften Ausgestaltung der Erfindung ist vorgesehen, dass wenigstens eine Laufschaufeln ein radial inneres Schaufeldeckband als radial innere Strömungskanalbegrenzung und/oder ein radial äußeres Schaufeldeckband als radial äußere Strömungskanalbegrenzung umfasst. Dadurch ist eine definierte Begrenzung des Strömungskanals möglich.

Ein weiterer Aspekt der Erfindung betrifft eine Strömungsmaschine mit einem Rotor nach einem der vorhergehenden Ausführungsbeispiele. Die sich hieraus ergebenden Merkmale und deren Vorteile sind den vorhergehenden Beschreibungen zu entnehmen.

Ein weiterer Aspekt der Erfindung betrifft ein Verfahren zum Herstellen eines Rotors für eine Strömungsmaschine, insbesondere für eine Flugzeugturbine, bei welchem Laufschaufeln mit einem Rotorgrundkörper verbunden werden, wobei radial unterhalb einer Schaufelplattform wenigstens einer Laufschaufel zumindest ein sich zwischen einer Hochdruckseite und einer Niederdruckseite des Rotors erstreckender Kanal ausgebildet wird. Erfindungsgemäß wird ein verbessertes Verhältnis von Masse zu Steifigkeit des Rotors dadurch erreicht, dass der zumindest eine Kanal als Kühlluftkanal und zusätzlich derart ausgebildet wird, dass eine Steigung einer Haupterstreckungsachse des Kanals über die Länge des Kanals bezüglich einer Drehachse des Rotors das gleiche Vorzeichen besitzt wie eine Steigung einer Haupterstreckungsachse einer radial inneren Strömungskanalbegrenzung des Rotors. Der Strömungskanals kann dabei grundsätzlich die Form eines Ringraums aufweisen. Die sich hieraus ergebenden Merkmale und deren Vorteile sind ebenfalls den vorhergehenden Beschreibungen zu entnehmen. Der Kanal kann beispielsweise durch spanabhebende Bearbeitung des Rotors erzeugt werden. Jedoch sind auch andere Herstellungsverfahren denkbar. Weiterhin kann vorgesehen sein, dass mehrere Kanäle in der beschriebenen Weise ausgebildet werden.

Weitere Merkmale der Erfindung ergeben sich aus den Ansprüchen, dem Ausführungsbeispiel sowie anhand der Zeichnungen. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigt:
- Fig. 1: eine schematische seitliche Schnittansicht eines erfindungsgemäßen Rotors; und
- Fig. 2: eine vergrößerte Darstellung des in Fig. 1 gezeigten Details II.

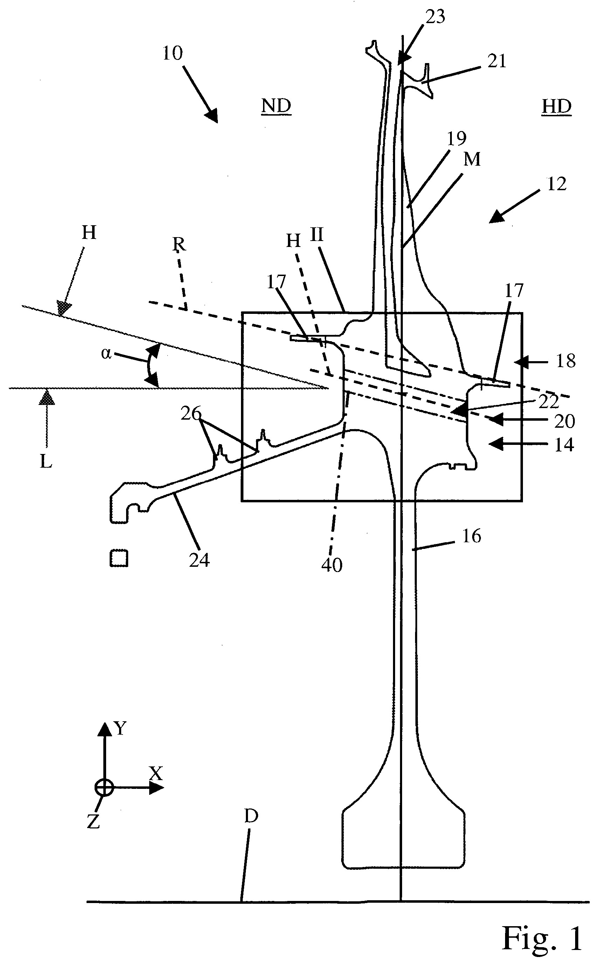

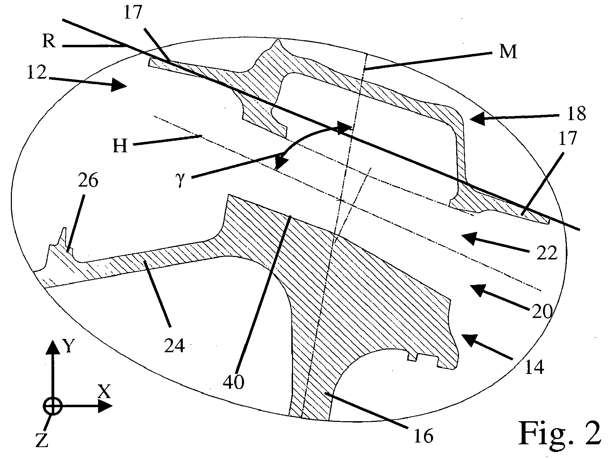

Fig. 1 zeigt eine schematische seitliche Schnittansicht eines erfindungsgemäßen Rotors 10 für eine Flugzeugturbine (nicht abgebildet) und wird im Folgenden in Zusammenschau mit Fig. 2 erläutert werden, wobei Fig. 2 eine vergrößerte Darstellung des in Fig. 1 gezeigten Details II zeigt. Der Rotor 10, der vorliegend als so genannte BLISK ausgebildet ist, umfasst mehrere Laufschaufeln 12. Jede Laufschaufel 12 ist über ihren Schaufelfuß 14 stoffschlüssig mit einem Rotorgrundkörper 16 verbunden. Zwischen einer Schaufelplattform 18 und dem Schaufelfuß 14 weist die Laufschaufel 12 im Bereich ihres Schaufelhalses 20 einen sich zwischen einer Hochdruckseite HD und einer Niederdruckseite ND des Rotors 10 erstreckenden Kanal 22 auf. Die Unterseite des Kanals 22 definiert dabei den radial äußeren Rand 40 der soliden, nicht-unterbrochenen Rotorscheibe 16, wobei dieser Rand 40 auch als "Liferim" bezeichnet wird. Der Rotor 10 weist dabei im vorliegenden Ausführungsbeispiel einen Kanal 22 pro Laufschaufel 12 auf. Grundsätzlich können jedoch auch mehr oder weniger Kanäle 22 als Laufschaufeln 12 vorgesehen sein. Des Weiteren ist jeder Kanal 22 im gezeigten Ausführungsbeispiel außenumfänglich geschlossen ausgebildet. Der Rotor 10 ist darüber hinaus frei von sich zwischen den Kanälen 22 und der Schaufelplattform 18 erstreckenden radialen Schlitzen oder dergleichen ausgebildet, wodurch erhöhte Strömungsverluste während des Betriebs sowie potenziell Lebenszeit verkürzende Materialschwächungen vermieden werden.

Die Haupterstreckungsachse H des Kanals 22 ist dabei gegenüber einer Drehachse D des Rotors 10 gekippt angeordnet und verläuft somit nicht-parallel zur Drehachse D. Des Weiteren besitzt die Steigung der Haupterstreckungsachse H das gleiche Vorzeichen wie die Steigung einer Haupterstreckungsachse R einer radial inneren Strömungskanalbegrenzung des Rotors 10. Die radial innere Strömungskanalbegrenzung wird dabei im gezeigten Ausführungsbeispiel durch ein der Schaufelplattform 18 zugeordnetes, radial inneres Schaufeldeckband 17 gebildet, wobei die Haupterstreckungsachse R der radial inneren Strömungskanalbegrenzung durch die einander gegenüberliegenden oberen Eckpunkte des Schaufeldeckbands 17 verläuft. Der Verlauf des Kanals 22 folgt damit dem Verlauf des Strömungskanals. Die Steigungen der Haupterstreckungsachse H des Kanals 22 und der Haupterstreckungsachse R sind im vorliegenden Beispiel betragsmäßig unterschiedlich, so dass sich auch die Haupterstreckungsachse H und die Haupterstreckungsachse R formal in wenigstens einer Projektionsebene in einem Punkt schneiden. Alternativ können die Haupterstreckungsachsen H, R parallel zueinander, aber jeweils nicht-parallel zur Drehachse D verlaufen.

Die Haupterstreckungsachse H des Kanals 22 ist in einem ersten Winkel α zur Drehachse D angeordnet, wobei der erste Winkel α in einer ersten Längsschnittebene, das heißt in der gezeigten X-Y-Ebene des Rotors 10 relativ zu einer parallel zur Drehachse D verlaufenden Linie L gemessen werden kann. Der erste Winkel α beträgt dabei im vorliegenden Ausführungsbeispiel 15°. Entsprechend beträgt ein komplementärer Winkel y, der wie in Fig. 2 erkennbar relativ zu einer senkrecht auf der Drehachse D stehenden Mittelachse M des Rotors 10 gemessen werden kann, 75°.

Durch die erfindungsgemäße Ausgestaltung des Kanals 22 wird eine Erhöhung der Freiheitsgrade bei der Strukturoptimierung des Rotors 10 erreicht. Der Kanal 22 und damit der Rand bzw. "Liferim" 40 werden wie bereits erwähnt derart angestellt, dass sie der Geometrie des Strömungskanals bzw. des Ringraumes folgen. Hierdurch wird der tragende, homogene und rotationssymmetrische Bereich des Rotorgrundkörpers 16 entsprechend radial nach außen vergrößert. Gegenüber einem herkömmlichen Rotor mit horizontal bzw. parallel zur Drehachse D geführtem Kanal steht daher beim erfindungsgemäßen Rotor 10 in Umfangsrichtung mehr nicht-unterbrochenes Material als aussteifende Scheibenstruktur zur Verfügung, wodurch ein besseres Masse-Steifigkeits-Verhältnis des Rotors 10 erreicht wird. Je mehr Material dabei radial außen, also in Strömungskanal- bzw. Ringraumnähe des Flugzeugtriebwerks, liegt, desto steifer wird der Rotor 10 z. B. gegenüber Biegeschwingungen. Die vorliegende Erfindung bedient sich somit des Trägheitsprinzips, nach dem die Wirkung einer Masse abhängig vom Abstand gegenüber ihrer Trägheitsachsen exponentiell wächst. Dies betrifft auch die Widerstandskennwerte des Rotors 10. Bei einem konventionellen Rotor mit einem herkömmlichen, horizontal ausgelegten Kanal bzw. Liferim bestimmt darüber hinaus der radial am weitesten innen liegende Verlauf des Gaskanals in einer Turbinenstufe die maximal realisierbare radiale Lage des Liferims bzw. Kanals. Diese Beschränkung wird durch den erfindungsgemäßen Rotor 10 ebenfalls aufgehoben.

Alternativ oder zusätzlich kann vorgesehen sein, dass die Haupterstreckungsachse H des Kanals 22 in einem zweiten Winkel β (nicht gezeigt) zur Drehachse D angeordnet ist, wobei der zweite Winkel in einer senkrecht auf der ersten Längsschnittebene stehenden zweiten Längsschnittebene des Rotors 10 relativ zur parallel zur Drehachse D verlaufenden Linie (nicht gezeigt) gemessen wird. Mit anderen Worten kann die Haupterstreckungsachse H gegenüber der in X-Richtung verlaufenden Drehachse D in der X-Z-Ebene des Rotors angewinkelt sein. Somit können auch Haupterstreckungsachse H vorgesehen sein, die windschief gegenüber der Drehachse D verlaufen. Weiterhin kann vorgesehen sein, dass die Haupterstreckungsachsen H aller Kanäle 22 formal auf einer Kegelmantelfläche liegen, wobei die Drehachse D des Rotors 10 die Kegelachse bildet.

Wie in Fig. 2 erkennbar ist, verjüngt sich der Querschnitt des Kanals 22 ausgehend von der Hochdruckseite HD zur Niederdruckseite ND hin. Es kann grundsätzlich auch vorgesehen sein, dass manche oder alle Kanäle 22 kreiszylindrisch ausgebildet sind oder elliptische, polygonale, nichtregelmäßige oder über ihre Länge variierende Querschnittsgeometrien besitzen. Weiterhin kann vorgesehen sein, dass benachbarte Kanäle 22 unterschiedliche Querschnittsgeometrien aufweisen, um einen sich während des Betriebs der Flugzeugturbine im Anbindungsbereich der Schaufelfüße 14 bzw. im Bereich des Kanals 22 einstellenden Temperaturgradienten besonders präzise einstellen zu können.

Jede Laufschaufel 12 umfasst weiterhin ein sich an die Schaufelplattform 18 anschließendes Schaufelblatt 19 sowie ein radial äußeres Schaufeldeckband 21, welches eine radial äußere Strömungskanalbegrenzung bildet. Weiterhin weist jede Laufschaufel 12 einen inneren Kühlkanal 23 auf. Im gezeigten Ausführungsbeispiel ist der Kühlkanal 23 nicht fluidisch mit dem Kanal 22 gekoppelt, so dass der Kanal 22 als Entlastungsbohrung fungiert und die radial außen liegenden Schaufelbereiche zugentlastet. Der Kanal 22 wird zum Durchleiten von Kühlluft verwendet. In einer weiteren alternativen Ausgestaltung kann der Kanal 22 fluidisch mit dem Kühlkanal 23 gekoppelt sein, so dass Kühlluft aus dem Kanal 22 in den Kühlkanal 23 übertreten kann.

An den Rotorgrundkörper 16 ist weiterhin eine Trommel (Drum) 24 mit zwei Dichtelementen 26 angebunden. Dies ermöglicht das Einbeziehen der Trommelsteifigkeit in die Steifigkeit des Rotors 10 und damit eine vorteilhafte Auslegung von Koppelschwingungen zwischen dem scheibenförmigen Rotorgrundkörper 16 und den Laufschaufeln 12. Der Rotor 10 kann daher ohne Massenzunahme ausgesteift werden. Die Trommel 24 ist am rotationssymmetrischen, homogenen Teil des Rotorgrundkörpers 16 radial unterhalb des Randes 40 angebunden. Aufgrund der dem Verlauf des Ringraums folgenden Haupterstreckungsachse H ergibt sich eine erhöhte konstruktive Freiheit zur Anordnung und Ausrichtung von zum Rotor 10 benachbarten Geometrien oder Bauteile wie beispielsweise der Trommel 24. Durch Anbindung der Trommel 24 in der Höhe der Schaufelfüße 14 bzw. unterhalb des Rands 40 wird die Steifigkeit der Trommel 24 vorteilhaft in den Rotorgrundkörper 16 eingekoppelt. Da die Anbindung der Trommel 24 am Rotorgrundkörper 16 radial weit außen liegt, fließt die Trommelsteifigkeit besonders stark in die Gesamtsystemsteifigkeit bei gekoppelten Laufschaufel-Rotorgrundkörper-Schwingungen ein. Der erfindungsgemäße Rotor 10 kann daher im Vergleich zum Stand der Technik leichter und gleichzeitig steifer ausgebildet werden. Zudem können kürzere radiale Bauweisen von Statoren (nicht gezeigt) des Flugzeugtriebwerks realisiert werden, da die Trommel 24 radial nah an den Strömungskanal gelegt werden kann. Es kann daher beispielsweise auf große Dichtelemente 26 (z. B. "Honeycombs") verzichtet werden, wodurch weitere Vorteile insbesondere im Hinblick auf den Wirkungsgrad der Flugzeugturbine erzielbar sind.

Die in den Unterlagen angegebenen Parameterwerte zur Definition von Messbedingungen für die Charakterisierung von spezifischen Eigenschaften des Erfindungsgegenstands sind auch im Rahmen von Abweichungen - beispielsweise aufgrund von Messfehlern, Systemfehlern, DIN-Toleranzen und dergleichen - als vom Rahmen der Erfindung mitumfasst anzusehen.

## Patentansprüche

1. Rotor (10) für eine Strömungsmaschine, insbesondere für eine Flugzeugturbine, mit Laufschaufeln (12), die mit einer Rotorscheibe (16) verbunden sind, wobei radial unterhalb einer Schaufelplattform (18) wenigstens einer Laufschaufel (12) zumindest ein sich zwischen einer Hochdruckseite (HD) und einer Niederdruckseite (ND) des Rotors (10) erstreckender Kühlluftkanal (22) vorgesehen ist und wobei eine Unterseite des Kühlluftkanals (22) einen radial äußeren, nicht-unterbrochenen Rand (40) der Rotorscheibe (16) definiert, **dadurch gekennzeichnet, dass** bezüglich einer Drehachse (D) des Rotors (10) eine Steigung einer Haupterstreckungsachse (H) des Kanals (22) und der Rand (40) der Rotorscheibe (16) über die Länge des Kanals (22) das gleiche Vorzeichen besitzt wie eine Steigung einer Haupterstreckungsachse (R) einer radial inneren Strömungskanalbegrenzung des Rotors (10).

2. Rotor (10) nach Anspruch 1, **dadurch gekennzeichnet, dass** der zumindest ein Kühlluftkanal (22) außenumfänglich geschlossen ausgebildet ist.

3. Rotor (10) nach Anspruch 1 oder 2, **dadurch gekennzeichnet, dass** die Haupterstreckungsachse (H) des Kühlluftkanals (22) in einem ersten Winkel (α) zur Drehachse (D) angeordnet ist, wobei der erste Winkel (α) in einer ersten Längsschnittebene (X-Y) des Rotors (10) relativ zu einer parallel zur Drehachse (D) verlaufenden Linie (L) gemessen wird.

4. Rotor (10) nach Anspruch 3, **dadurch gekennzeichnet, dass** der erste Winkel (α) zwischen 2° und 80°, insbesondere zwischen 10° und 20° beträgt.

5. Rotor (10) nach einem der Ansprüche 3 bis 4, **dadurch gekennzeichnet, dass** die Haupterstreckungsachse (H) des Kühlluftkanäls (22) in einem zweiten Winkel (β) zur Drehachse (D) angeordnet ist, wobei der zweite Winkel (β) in einer senkrecht auf der ersten Längsschnittebene stehenden zweiten Längsschnittebene (X-Z) des Rotors (10) relativ zu einer parallel zur Drehachse (D) verlaufenden Linie gemessen wird.

6. Rotor (10) nach Anspruch 5, **dadurch gekennzeichnet, dass** der zweite Winkel (β) zwischen 2° und 80°, insbesondere zwischen 10° und 20° beträgt.

7. Rotor (10) nach einem der Ansprüche 1 bis 6, **dadurch gekennzeichnet, dass** der Kühlluftkanal (22) als Entlastungsbohrung ausgebildet ist.

8. Rotor (10) nach einem der Ansprüche 1 bis 7, **dadurch gekennzeichnet, dass** dieser radial unterhalb des Kühlluftkanals (22) mit einer Trommel (24) verbunden ist.

9. Rotor (10) nach einem der Ansprüche 1 bis 8, **dadurch gekennzeichnet, dass** bezüglich der Drehachse (D) des Rotors (10) die Steigungen der Haupterstreckungsachsen (H) mehrerer oder aller Kühlluftkanäle (22) des Rotors (10) das gleiche Vorzeichen besitzen wie die Stei- > gung der Haupterstreckungsachse (R) der radial inneren Strömungskanalbegrenzung.

10. Rotor (10) nach einem der Ansprüche 1 bis 9, **dadurch gekennzeichnet, dass** wenigstens zwei Kühlluftkanäle (22) und/oder benachbarte Kühlluftkanäle (22) unterschiedliche Querschnittsgeometrien aufweisen.

11. Rotor (10) nach Anspruch 9 oder 10, **dadurch gekennzeichnet, dass** die Haupterstreckungsachsen (H) aller Kühlluftkanäle (22) auf einer Kegelmantelfläche liegen.

12. Rotor (10) nach einem der Ansprüche 1 bis 11, **dadurch gekennzeichnet, dass** die Laufschaufeln (12) lösbar oder stoffschlüssig mit dem Rotorgrundkörper (16) verbunden sind.

13. Rotor (10) nach einem der Ansprüche 1 bis 12, **dadurch gekennzeichnet, dass** wenigstens eine Laufschaufel (12) ein radial inneres Schaufeldeckband (17) als radial innere Strömungskanalbegrenzung und/oder ein radial äußeres Schaufeldeckband (21) als radial äußere Strömungskanalbegrenzung umfasst.

14. Strömungsmaschine mit einem Rotor (10) nach einem der Ansprüche 1 bis 13.

15. Verfahren zum Herstellen eines Rotors (10) für eine Strömungsmaschine, insbesondere für eine Flugzeugturbine, bei welchem Laufschaufeln (12) mit einer Rotorscheibe (16) verbunden werden, wobei radial unterhalb einer Schaufelplattform (18) wenigstens einer Laufschaufel (12) zumindest ein sich zwischen einer Hochdruckseite (HD) und einer Niederdruckseite (ND) des Rotors (10) erstreckender Kühlluftkanal (22) ausgebildet wird und wobei eine Unterseite des Kühlluftkanals (22) einen radial äußeren, nichtunterbrochenen Rand (40) der Rotorscheibe (16) definiert, **dadurch gekennzeichnet, dass** der Kühlluftkanal (22) derart ausgebildet wird, dass bezüglich einer Drehachse (D) des Rotors (10) eine Steigung einer Haupterstreckungsachse (H) des Kühlluftkanals (22) und der Rand (40) der Rotorscheibe (16) über die Länge des Kühlluftkanals (22) das gleiche Vorzeichen besitzt wie eine Steigung einer Haupterstreckungsachse (R) einer radial inneren Strömungskanalbegrenzung des Rotors (10).

## Claims

1. A rotor (10) for a turbo-machine, in particular for an aircraft turbine, having rotor blades (12) which are connected to a rotor disk (16), wherein provided radially below a blade platform (18) of at least one rotor blade (12) there is at least one cooling-air channel (22) that extends between a high-pressure side (HD) and a low-pressure side (ND) of the rotor (10), and wherein a lower side of the cooling-air channel (22) defines a radially outer, non-interrupted edge (40) of the rotor disk (16), **characterised in that** with regard to a rotary axis (D) of the rotor (10) a slope of a main axis (H) of extent of the channel (22) and the edge (40) of the rotor disk (16) over the length of the channel (22) have the same preceding sign as a slope of a main axis (R) of extent of a radially inner flow-channel-limit of the rotor (10).

2. A rotor (10) according to claim 1, **characterised in that** the at least one cooling-air channel (22) is formed so as to be closed on its outer periphery.

3. A rotor (10) according to claim 1 or 2, **characterised in that** the main axis (H) of extent of the cooling-air channel (22) is arranged at a first angle (α) to the rotary axis (D), wherein the first angle (α) is measured in a first longitudinal-section plane (X-Y) of the rotor (10) relative to a line (L) running parallel to the rotary axis (D).

4. A rotor (10) according to claim 3, **characterised in that** the first angle (α) amounts to between 2° and 80°, in particular to between 10° and 20°.

5. A rotor (10) according to one of claims 3 to 4, **characterised in that** the main axis (H) of extent of the cooling-air channel (22) is arranged at a second angle (β) to the rotary axis (D), wherein the second angle (β) is measured in a second longitudinal-section plane (X-Z) of the rotor (10), which is perpendicular to the first longitudinal-section plane, relative to a line running parallel to the rotary axis (D).

6. A rotor (10) according to claim 5, **characterised in that** the second angle (β) amounts to between 2° and 80°, in particular to between 10° and 20°.

7. A rotor (10) according to one of claims 1 to 6, **characterised in that** the cooling-air channel (22) is formed as a relief bore.

8. A rotor (10) according to one of claims 1 to 7, **characterised in that** it is connected to a drum (24) radially below the cooling-air channel (22).

9. A rotor (10) according to one of claims 1 to 8, **characterised in that** with regard to the rotary axis (D) of the rotor (10) the slopes of the main axes (H) of extent of a plurality of or all of the cooling-air channels (22) of the rotor (10) have the same preceding sign as the slope of the main axis (R) of extent of the radially inner flow-channel-limit.

10. A rotor (10) according to one of claims 1 to 9, **characterised in that** at least two cooling-air channels (22) and/or adjacent cooling-air channels (22) have different cross-sectional geometries.

11. A rotor (10) according to claim 9 or 10, **characterised in that** the main axes (H) of extent of all of the cooling-air channels (22) lie on a conical lateral surface.

12. A rotor (10) according to one of claims 1 to 11, **characterised in that** the rotor blades (12) are connected to the rotor base body (16) in a detachable or substance-locking manner.

13. A rotor (10) according to one of claims 1 to 12, **characterised in that** at least one rotor blade (12) comprises a radially inner blade shroud band (17) as a radially inner flow-channel-limit and/or a radially outer blade shroud band (21) as a radially outer flow-channel-limit.

14. A turbo-machine having a rotor (10) according to one of claims 1 to 13.

15. A method for producing a rotor (10) for a turbo-machine, in particular for an aircraft turbine, in which rotor blades (12) are connected to a rotor disk (16), wherein formed radially below a blade platform (18) of at least one rotor blade (12) there is at least one cooling-air channel (22) that extends between a high-pressure side (HD) and a low-pressure side (ND) of the rotor (10), and wherein a lower side of the cooling-air channel (22) defines a radially outer, non-interrupted edge (40) of the rotor disk (16), **characterised in that** the cooling-air channel (22) is formed in such a way that with regard to a rotary axis (D) of the rotor (10) a slope of a main axis (H) of extent of the cooling-air channel (22) and the edge (40) of the rotor disk (16) over the length of the cooling-air channel (22) have the same preceding sign as a slope of a main axis (R) of extent of a radially inner flow-channel-limit of the rotor (10).

## Revendications

1. Rotor (10) pour une turbomachine, en particulier pour une turbine d'avion, avec des aubes (12) reliées à un disque de rotor (16), dans lequel, radialement au-dessous d'une plate-forme d'aube (18) d'au moins une aube (12), est prévu au moins un conduit d'air de refroidissement (22) s'étendant entre un côté haut pression (HD) et un côté basse pression (ND) du rotor (10) et dans lequel un côté inférieur du conduit d'air de refroidissement (22) définit un bord (40) radialement extérieur et ininterrompu du disque de rotor (16), **caractérisé en ce que**, par rapport à un axe de rotation (D) du rotor (10), une inclinaison d'un axe d'extension principal (H) du conduit (22) et le bord (40) du disque de rotor (16) sur toute la longueur du conduit (22) ont le même signe qu'une inclinaison d'un axe d'extension principal (R) d'une limitation radialement intérieure du conduit d'écoulement du rotor (10).

2. Rotor (10) selon la revendication 1, **caractérisé en ce qu'**au moins un conduit d'air de refroidissement (22) est fermé sur sa périphérie extérieure.

3. Rotor (10) selon la revendication 1 ou la revendication 2, **caractérisé en ce que** l'axe d'extension principal (H) du conduit d'air de refroidissement (22) forme un premier angle (α) avec l'axe de rotation (D), le premier angle (α) étant mesuré sur un premier plan de coupe longitudinale (X-Y) du rotor (10) par rapport à une ligne (1) parallèle à l'axe de rotation (D).

4. Rotor (10) selon la revendication 3, **caractérisé en ce que** le premier angle (α) est compris entre 2° et 80°, en particulier entre 10° et 20°.

5. Rotor (10) selon les revendications 3 à 4, **caractérisé en ce que** l'axe d'extension principal (H) du conduit d'air de refroidissement (22) forme un deuxième angle (β) par rapport à l'axe de rotation (D), le deuxième angle (β) étant mesuré dans un deuxième plan de coupe longitudinale (X-Z) perpendiculaire au premier plan de coupe longitudinale du rotor (10) par rapport à une ligne parallèle à l'axe de rotation (D).

6. Rotor (10) selon la revendication 5, **caractérisé en ce que** le deuxième angle (β) est compris entre 2° et 80°, en particulier entre 10° et 20°.

7. Rotor (10) selon l'une quelconque des revendications 1 à 6, **caractérisé en ce que** le conduit d'air de refroidissement (22) est configuré en forme d'alésage de décharge.

8. Rotor (10) selon l'une quelconque des revendications 1 à 7, **caractérisé en ce que** celui-ci est relié à un tambour (24) radialement au-dessous du conduit d'air de refroidissement (22).

9. Rotor (10) selon l'une quelconque des revendications 1 à 8, **caractérisé en ce que**, par rapport à l'axe de rotation (D) du rotor (10), les inclinaisons des axes d'extension principaux (H) de plusieurs ou de tous les conduits d'air de refroidissement (22) du rotor (10) ont le même signe que l'inclinaison de l'axe d'extension principal (R) de la limitation radialement intérieure du conduit d'écoulement.

10. Rotor (10) selon l'une quelconque des revendications 1 à 9, **caractérisé en ce qu'**au moins deux conduits d'air de refroidissement (22) et/ou des conduits d'air de refroidissement (22) voisins ont des géométries de section transversale différentes.

11. Rotor (10) selon la revendication 9 ou la revendication 10, **caractérisé en ce que** les axes principaux (H) de tous les conduits d'air de refroidissement (22) sont situés sur une surface latérale conique.

12. Rotor (10) selon l'une quelconque des revendications 1 à 11, **caractérisé en ce que** les aubes (12) sont reliées au corps du rotor (16) de manière détachable ou par liaison de matière.

13. Rotor (10) selon l'une quelconque des revendications 1 à 12, **caractérisé en ce qu'**au moins une aube (12) comprend une bande de recouvrement ( 17) radialement intérieure en tant que limitation radialement intérieure du conduit d'écoulement et/ou une bande de recouvrement (21) radialement extérieure en tant que limitation radialement extérieure du conduit d'écoulement.

14. Turbomachine comportant un rotor (10) selon l'une quelconque des revendications 1 à 13.

15. Procédé de fabrication d'un rotor (10) pour une turbomachine, en particulier pour une turbine d'avion, avec des aubes (12) reliées à un disque de rotor (16), dans lequel, radialement au-dessous d'une plate-forme d'aube (18) d'au moins une aube (12), est prévu au moins un conduit d'air de refroidissement (22) s'étendant entre un côté haut pression (HD) et un côté basse pression (ND) du rotor (10) et dans lequel un côté inférieur du conduit d'air de refroidissement (22) définit un bord (40) radialement extérieur et ininterrompu du disque de rotor (16), **caractérisé en ce que** le conduit d'air de refroidissement (22) est configuré de manière que, par rapport à un axe de rotation (D) du rotor (10), une inclinaison d'un axe d'extension principal (H) du conduit d'air de refroidissement (22) et le bord (40) du disque de rotor (16) sur toute la longueur du conduit d'air de refroidissement (22) ont le même signe qu'une inclinaison d'un axe d'extension principal (R) d'une limitation radialement intérieure du conduit d'écoulement du rotor (10).
